(19) Europäisches Patentamt
European Patent Office
Office européen des brevets

(11) **EP 3 307 696 B1**

(12) **EUROPEAN PATENT SPECIFICATION**

(45) Date of publication and mention
of the grant of the patent:
**31.07.2024 Bulletin 2024/31**

(21) Application number: **16730304.9**

(22) Date of filing: **09.06.2016**

(51) International Patent Classification (IPC):
*C04B 41/00* (2006.01)   *C04B 41/52* (2006.01)
*C04B 41/71* (2006.01)   *C04B 111/80* (2006.01)
*C04B 111/82* (2006.01)

(52) Cooperative Patent Classification (CPC):
(C-Sets available)
**C04B 41/71; C04B 41/009; C04B 41/52**   (Cont.)

(86) International application number:
**PCT/EP2016/063192**

(87) International publication number:
**WO 2016/202680 (22.12.2016 Gazette 2016/51)**

(54) **COATED FIBER CEMENT PRODUCTS AND METHODS FOR THE PRODUCTION THEREOF**

BESCHICHTETE FASERZEMENTPRODUKTE UND VERFAHREN ZUR HERSTELLUNG DAVON

PRODUITS EN FIBROCIMENT ENDUITS ET LEURS PROCÉDÉS DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2015 EP 15172110**

(43) Date of publication of application:
**18.04.2018 Bulletin 2018/16**

(73) Proprietor: **Etex Germany Exteriors GmbH
59269 Beckum (DE)**

(72) Inventors:
• **HOQUE-CHOWDHURY, Heidi
69181 Leimen Gauangelloch (DE)**
• **SCHMIDT, Gerhard
76669 Bad Schönborn (DE)**

(74) Representative: **Etex Services NV - Etex IPSC
Kuiermansstraat 1
1880 Kapelle-op-den-Bos (BE)**

(56) References cited:
**EP-A1- 0 894 780      EP-A1- 3 006 645
EP-B1- 1 914 215      WO-A1-2007/090131
WO-A1-2011/020755   WO-A1-2013/151442
JP-B2- 5 208 804      US-A- 5 871 824
US-B1- 6 617 413**

(52) Cooperative Patent Classification (CPC): (Cont.)

C-Sets
**C04B 41/009, C04B 20/0048, C04B 28/02;
C04B 41/52, C04B 41/0036, C04B 41/0045,
C04B 41/4884, C04B 2103/54;
C04B 41/52, C04B 41/0045, C04B 41/4884;
C04B 41/52, C04B 41/483**

**Description**

**Field of the invention**

The present invention relates to coated fiber cement products as well as to methods for manufacturing such products. The present invention further relates to various uses of these coated fiber cement products, in particular as building materials.

**Background of the invention**

Coated fiber cement products are well known and widely used as building materials.
European patent EP1914215B1 describes such coated fiber cement products.
WO2011/020755A1 discloses a process for producing a decoratively printed surface on a flat workpiece comprising the steps of: providing a cured fiber cement product having at least one surface; applying a base layer on top of said cured fiber cement product, including a first layer; drying said first layer; providing a radiation curable composition comprising pigment to the first layer, and curing the radiation curable composition by radiation.
US5871824 discloses A process for manufacturing coated fiber cement products, wherein said process comprises the steps of: providing a cured fiber cement product having at least one surface; applying a base layer (primer) on top of said cured fiber cement product, including a first layer; drying said first layer; providing a radiation curable composition (top coat) comprising pigment to the first layer, and curing the radiation curable composition by radiation.
A remaining disadvantage of the known coated fiber cement products is, however, that the pigments present in the coating layer(s) seem to chemically disintegrate gradually in time. This results in the formation of visible brownish spots within the coating layer(s), which is undesirable for obvious esthetical reasons.
Up to now, there is no efficient strategy to manage this problem.

**Summary of the invention**

An object of the present invention is to provide improved coated fiber cement products, as well as processes for the production thereof, which products do not suffer from the phenomenon of chemical disintegration of pigments in the coating layer(s) and the undesirable visible consequences thereof. Without being bound to or limited by any theory or hypothesis, further experimental research performed by the present inventors appeared to reveal that the chemical destabilization, disintegration and/or destruction of the pigments in the different coating layer(s) of coated fiber cement products is caused by the alkaline pH of the moisture, that is still present within the fiber cement product but is gradually driven out and migrates through the pigmented coating layers. As a consequence, any pigments present in these coating layer(s), which are typically alkaline instable, are damaged and disintegrate to form visible brownish spots at the surface of the fiber cement products. The present invention provides processes where such migration of the pigments through the coating layers is substantially limited and in most cases even prevented.
According to a first aspect, the present invention provides processes for manufacturing coated fiber cement products, wherein these processes comprise the steps of:

(i) providing a cured fiber cement product having at least one surface;
(ii) optionally applying a primer to the at least one surface of the cured fiber cement product;
(iii) providing a first coating layer of a first radiation curable coating composition to the at least one surface, which first radiation curable coating composition is pigment-free;
(iv) partially curing the first coating layer of radiation curable coating composition by radiation;
(v) providing a second coating layer of a second radiation curable coating composition to the partially cured first coating layer, the second radiation curable coating composition comprising one or more alkaline-instable pigments;
(vi) curing the first and the second layer of radiation curable coating composition by radiation, wherein the first and the second radiation curable coating composition are the same with the proviso that the first radiation curable coating composition is pigment-free and the second radiation curable coating composition comprises one or more alkaline instable pigments and has a pigment volume concentration (PVC) in the range of between 2% and 10%, wherein PVC (expressed in %) of said composition is calculated as the ratio of the volume of pigment versus the total volume of solids, multiplied by 100.

In particular embodiments of these processes, the second radiation curable coating composition comprises organic pigments.
In certain particular embodiments of these processes, the second radiation curable coating composition comprises one to five different pigments.

In further particular embodiments of these processes, the second coating layer has a hiding power of about 90% to about 100%.

In yet further particular embodiments of these processes, the thickness of the second coating layer ranges from about $10\mu m$ to about $120\mu m$.

In particular embodiments of these processes, the thickness of the first coating layer ranges from about $5\mu m$ to about $100\mu m$.

In further particular embodiments of these processes, the step of partially curing the first layer of radiation curable coating composition is done by irradiation using about 100 to about 800 $mJ/cm^2$.

In yet further particular embodiments of these processes, the first and the second radiation curable coating compositions are UV-curable compositions.

In other further particular embodiments of these processes, the first and the second radiation curable coating compositions are electron beam curable compositions.

In particular embodiments of these processes, the first and the second radiation curable coating compositions are isocyanate-bearing polyurethanes having ethylenically unsaturated double bonds.

In further particular embodiments of these processes, the second coating layer is covered with a radiation permeable film prior to the curing step.

In further particular embodiments of these processes, the curing step is preceded by a treatment of the second coating layer by means of an excimer laser.

In a second aspect, the present invention provides fiber cement products obtainable by the processes of the present invention.

In particular embodiments, the fiber cement products produced by the processes of the present invention can be used to provide an outer surface to walls, both internal as well as external, a building or construction, e.g. as façade plate, siding, etc.

The independent and dependent claims set out particular and preferred features of the invention.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

Figure 1 is a schematically view of a process according to the invention.
Figure 2 shows a schematically view of a cross section of a fiber cement product according to the invention.

The same reference signs refer to the same, similar or analogous elements in the different figures.

## Description of illustrative embodiments

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry" or "(fiber) cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

The terms "predetermined" and "predefined" as used herein when referring to one or more parameters or properties generally mean that the desired value(s) of these parameters or properties have been determined or defined beforehand, i.e. prior to the start of the process for producing the products that are characterized by one or more of these parameters or properties.

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

The term "pigment volume concentration (abbreviated as PVC)" as used herein generally refers to the amount of pigment(s) versus the total amount of solids (i.e. pigment(s), binder(s), other solids) in a coating composition and can be calculated via the following mathematical formula:

"Pigment volume concentration" (expressed in %) = "PVC" (expressed in %) =

Volume of pigment/ (Volume of solids) * 100 (expressed in %) =

Volume of pigment/ (Volume of pigment + Volume of solid binder) * 100 (expressed in %) =

Volume of pigment/ (Volume of pigment + Volume of non-volatile binder) * 100 (expressed in %)

The term "UV-curable" refers to a composition that can polymerize upon application of UV irradiation. Typically, this at least implies the presence of photo-polymerizable monomers or oligomers, together with photoinitiators and/or photosensitizers.

The terms "mass-coloured", "coloured in the mass", "through-coloured" when referring to a fiber cement product has the meaning that at least part of the, and preferably the entire, internal structure of that fiber cement product comprises at least one pigment.

The term "hiding power" as used herein is the property of a coating which enables it to hide the surface over which it is applied. The hiding power is directly linked to the film application method and the film thickness. In a coating with strong hiding power, the pigment particles scatter the light so strongly that it hardly reaches the substrate. If residual light is reflected from the substrate, it is so strongly scattered that it does not reach the eye. There are a number of standard test methods available. For instance, BS 3900-D4 (i.e. also referred to as ISO 2814), BS 3900-D7 (i.e. also referred to as ISO 6504/1) or BS 3900-D11 (also referred to as ISO 6504/3) are standard method for determining the hiding power of coatings.

The term "transparent" or "transparency" when referring to a coating composition or a coating layer refers to the physical characteristic of allowing light to pass through the coating without being scattered. Transparency can be measured with any method known in the art. For instance, a haze meter measures the transparency, haze, see-through quality, and total transmittance of a coating, based on how much visible light is diffused or scattered when passing through the coating. Haze is measured with a wide angle scattering test in which light is diffused in all directions which results in a loss of contrast. That percentage of light that when passing through deviates from the incident beam greater than 2.5 degrees on average is defined as haze. See through quality is measured with a narrow angle scattering test in which light is diffused in a small range with high concentration. This test measures the clarity with which finer details can be seen through the coating being tested. The haze meter also measures total transmittance. Total transmittance is the measure of the total incident light compared to the light that is actually transmitted (e.g. total transmittance). So the incident light may be 100%, but because of absorption and reflection the total transmittance may only be 94%. The data gained from the haze meter can be transferred to a PC for further data processing to ensure a consistent product.

The invention will now be further explained in detail with reference to various embodiments.

The present invention provides improved coated fiber cement products, as well as processes for the production thereof, which products do not suffer from the phenomenon of chemical disintegration of pigments in the coating layer(s) and the undesirable visible consequences thereof.

Extensive experimental research performed by the present inventors appeared to reveal that the chemical destabilization, disintegration and/or destruction of the pigments in the different coating layer(s) of coated fiber cement products is caused by the alkaline pH of the moisture, that is still present within the fiber cement product but is gradually driven out and migrates through the pigmented coating layers. As a consequence, any pigments present in these coating layer(s), which are typically alkaline instable, are damaged and disintegrate to form visible brownish spots at the surface of the fiber cement products.

The present invention provides processes where such migration of the pigments through the coating layers is substantially limited and in most cases even prevented.

Thus, in a first aspect, the present invention provides processes for providing coated fiber cement products, wherein these processes comprise the steps of:

(i) providing a cured fiber cement product having at least one surface;
(ii) optionally applying a primer to the at least one surface of the cured fiber cement product;
(iii) providing a first coating layer of a first radiation curable coating composition to the at least one surface;
(iv) partially curing the first coating layer of radiation curable coating composition by radiation;
(v) providing a second coating layer of a second radiation curable coating composition to the partially cured first layer, the second radiation curable coating composition comprising pigments;
(vi) curing the first and the second coating layer of radiation curable coating composition by radiation,

wherein the first and the second radiation curable coating composition are the same with the proviso that the first radiation curable coating composition is pigment-free and the second radiation curable coating composition comprises one or more alkaline instable pigments and has a pigment volume concentration (PVC) in the range of between 2% and 10%, wherein PVC (expressed in %) of said composition is calculated as the ratio of the volume of pigment versus the total volume of solids, multiplied by 100.

The first step of the processes of the invention comprises providing a cured fiber cement product having at least one surface, which step can be performed according to any method known in the art for preparing fiber cement products.

For example, a fiber cement slurry can first be prepared by one or more sources of at least cement, water and fibers. In certain specific embodiments, these one or more sources of at least cement, water and fibers are operatively connected to a continuous mixing device constructed so as to form a cementitious fiber cement slurry. In particular embodiments, when using cellulose fibers or the equivalent of waste paper fibers, a minimum of about 3%, such as about 4%, of the total slurry mass of these cellulose fibers is used. In further particular embodiments, when exclusively cellulose fibers are used, between about 4% to about 12%, such as more particularly, between about 7% and about 10%, of the total slurry mass of these cellulose fibers is used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, it has been found that a range between about 15 DEG SR and about 45 DEG SR can be particularly advantageous for the processes of the invention.

Once a fiber cement slurry is obtained, the manufacture of the fiber-reinforced cement products can be executed according to any known procedure. The process most widely used for manufacturing fiber cement products is the Hatschek process, which is performed using a modified sieve cylinder paper making machine. Other manufacturing processes include the Magnani process, injection, extrusion, flow-on and others. In particular embodiments, the fiber cement products of the present invention are provided by using the Hatschek process. The "green" or uncured fiber cement product is optionally post-compressed usually at pressures in the range from about 22 to about 30 MPa to obtain the desired density.

The processes according to the present invention may further comprise the step of cutting the fiber cement products to a predetermined length to form a fiber cement product. Cutting the fiber cement products to a predetermined length can be done by any technique known in the art, such as but not limited to water jet cutting, air jet cutting or the like. The fiber cement products can be cut to any desirable length, such as but not limited to a length of between about 1 m and about 15 m, such as between about 1 m and about 10 m, more particularly between about 1 m and about 5 m, most particularly between about 1 m and about 3 m.

It will be understood by the skilled person that the processes of the present invention may further comprise additional steps of processing the produced fiber cement products.

For instance, in certain particular embodiments, during the processes of the present invention, the fiber cement slurry and/or the fiber cement products may undergo various intermediate treatments, such as but not limited to treatment with one or more hydrophobic agents, treatment with one or more flocculants, additional or intermediate pressing steps, etc.

As soon as the fiber cement products are formed, these are trimmed at the lateral edges. The border strips can optionally be recycled through immediate mixing with the recycled water and directing the mixture to the mixing system again.

After manufacturing, the obtained fiber cement products are cured. Indeed, after production, fiber cement products can be allowed to cure over a time in the environment in which they are formed, or alternatively can be subjected to a thermal cure (e.g. by autoclaving or the like).

In further particular embodiments, the "green" fiber cement product is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 Å (angstrom) Tobermorite in the fiber cement product.

In yet further particular embodiments, the "green" fiber cement product may be first pre-cured to the air, after which the pre-cured product is further air-cured until it has its final strength, or autoclave-cured using pressure and steam, to give the product its final properties.

In particular embodiments of the present invention, the processes may further comprise the step of thermally drying the obtained fiber cement products. After curing, the fiber cement product being a panel, sheet or plate, may still comprise a significant weight of water, present as humidity. This may be up to 10 even 15 %w, expressed per weight of the dry product. The weight of dry product is defined as the weight of the product when the product is subjected to drying at 105°C in a ventilated furnace, until a constant weight is obtained.

In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

The step of providing a primer on the surface of the fiber cement products involves the use of a primer coating composition comprising a (i.e. at least one) binder and optionally a pigment. Binders and pigments for primers are known in the art and are not critical to the invention as long as the primers are alkaline stable and suitable for use on fiber cement surfaces.

In particular embodiments, the primer is a conventional coating used in the process according to the invention and is not curable by radiation or by chemical crosslinking. Suitable primer coatings are those with binders obtained by aqueous free radical or ionic emulsion polymerization. Acrylic and/or methacrylic (co)polymers are particularly preferred as binders of the primer coatings.

These acrylic and/or methacrylic (co)polymers are usually prepared by aqueous radically initiated emulsion polymerization of esters of acrylic acid and/or methacrylic acid with C1-C12 alkanols as well as a minor amount of acrylic and/or methacrylic acid as monomers. Preference is given in particular to esters of acrylic and methacrylic acid with C1-C8 alkanols; ethyl acrylate, n-butyl acrylate, ethylhexyl acrylate and methylmethacrylate are particularly preferred. The emulsion polymerization requires the use of surfactants as stabilizers. Non-ionic surfactants are preferred. Alcohol ethoxylates are particularly preferred. Primer coatings with a hydroxyl number (measured according to ISO 4629) of at least 1 are preferred. Hydroxyl numbers of at least 1,5 are particularly preferred.

Preferably, the minimum film forming temperature during the drying of the primer coating is below 60°C.

At least one layer of the primer coating composition comprises at least one pigment. Typical pigments are metal oxides, such as titanium dioxide, iron oxides, spinell pigments, titanates and other oxides, or organic alkaliresistant pigments such as phtalocyanines and azo compounds.

Preferably, the pigment volume concentration of the pigmented layer of the conventional coating is in the range of from about 0,01 to about 25%. Pigment volume concentrations in the range of from 0,05 to 20% are particularly preferred.

The primer coating composition generally comprises, besides the polymeric binders and pigments, also usual auxiliaries, e.g. fillers, wetting agents, viscosity modifiers, dispersants, defoamers, preservatives and hydrophobisizers, biocides, fibers and other usual constituents. Examples of suitable fillers are aluminosilicates, silicates, alkalineearth metal carbonates, preferably calcium carbonate in the form of calcite or lime, dolomite, and also aluminum silicates or magnesium silicates, e.g. talc.

The solids content of suitable primer coatings is generally in the range from about 20% to about 60% by weight.

The primer coating compositions comprise as liquid component essentially water and, if desired, an organic liquid miscible with water, for example an alcohol.

The primer coating compositions are applied at a wet coating weight in the range from about 50 to about 500 $g/m^2$, in particular from about 70 to about 300 $g/m^2$, in a known manner, for example by spraying, trowelling, knife application, brushing, rolling or pouring onto the cement bonded board, or by a combination of one or more applications.

In particular embodiments, the primer coating composition used in the processes of the present invention is a styrole acrylate primer.

In particular embodiments, the primer coating composition used in the processes of the present invention is "Natura Walzgrundierung".

A further step in the processes of the invention comprises providing a first coating layer of a first radiation curable coating composition to the at least one surface of the fiber cement product.

Subsequently, the first coating layer of the first radiation curable coating composition is partially cured. "Partially curing" in the context of the present invention means that only part of the bonds in the first radiation curable coating composition are activated by radiation, such that the curing of the first radiation curable coating composition is not complete after the partial curing step. Partially curing is also referred to in the art as gelling.

Subsequently, a second coating layer of a second radiation curable coating composition is applied to the partially cured first coating layer. Finally, the first and the second coating layer of radiation curable coating compositions are cured by radiation.

The combination of steps of partially curing the first coating layer followed by applying a second pigmented coating layer followed by curing the second coating layer has two important advantageous consequences.

First, the second coating layer, when applied onto the partially cured surface of the first coating layer, is able to react with the remaining unreacted double bonds (that are exposed at the surface) of the first coating layer. This phenomenon causes the two layers to bond together very strongly, providing a stronger product in its entirety.

Secondly, because of the fact that the first coating layer is only partially (i.e. incompletely cured), the surface of the first coating layer forms a water-impermeable interface. This water tight interface remains present after application of the second coating layer. In the final two-layer coating system, this results in a water impermeable interface present in between the first and the second coating layer. The presence of such a water tight interface has the advantage that alkaline humidity, which is typically present in the fiber cement product, is prevented from migrating from the fiber cement material (through the first coating layer) into the second coating layer. As previously described, alkaline humidity, when contacting the pigments of the second coating layer, causes the pigments to loose their color or to be completely destroyed. However, because of the presence of the water-impermeable interface between the first and the second coating layer, this alkaline humidity will thus not be brought into contact with the pigments in the second coating layer, visually present at the outer surface of the fiber cement product. As such, the pigments that are visibly present onto the surface of the fiber cement product are prevented from alkaline destruction.

Both the first coating layer of the first coating composition and the second coating layer of the second coating composition are coating layers that are curable by radiation.

The first and the second coating compositions, each comprise at least one polymer having ethylenically unsaturated double bonds and which is radiation curable. According to the invention, the at least one radiation curable polymer present in the first coating composition is identical to the at least one radiation curable polymer present in the second coating composition.

Possible radiation-curable polymers for both the first and the second radiation-curable coating compositions are in principle any polymers which have ethylenically unsaturated double bonds and which can undergo radical-initiated polymerization on exposure to UV radiation or electron beam radiation.

The monomers having unsaturated double bonds such as acryl amide monomers, meth acrylic acid monomers, (meth) acrylic acid monomers, N - vinyl pyrrolidone and crotonic acid are preferred to be the polymerizable monomer.

Care should be taken here that the content of ethylenically unsaturated double bonds in the polymer is sufficient to ensure effective crosslinking. The content of ethylenically unsaturated double bonds in the is generally in the range from about 0,01 to about 1,0 mol/100g of polymer, more preferably from about 0,05 to about 0,8 mol/100 g of polymer and most preferably from about 0,1 to about 0,6 mol/100 g of polymer. Suitable polymers are for example but not limited to polyurethane derivatives which contain ethylenically unsaturated double bonds, such as polyurethane acrylates.

According to certain embodiments, the first radiation curable coating composition is a UV-curable composition, the UV-curable composition comprising a first polymer A comprising polyurethane derivate containing ethylenically unsaturated double bonds, and a second polymer B being free isocyanate-bearing polyurethanes having ethylenically unsaturated double bonds.

According to certain embodiments, the second radiation curable coating composition is a UV-curable composition, the UV-curable composition comprising a first polymer A comprising polyurethane derivate containing ethylenically unsaturated double bonds, and a second polymer B being free isocyanate-bearing polyurethanes having ethylenically unsaturated double bonds.

Suitable polymers A are polyurethane derivatives which contain ethylenically unsaturated double bonds, such as polyurethane acrylates.

The radiation-curable coating composition applied in the process comprises at least one chemically and radiation crosslinkable polymer B.

Suitable polymers B are free isocyanate-bearing polyurethanes having ethylenically unsaturated double bonds. Polyurethane acrylates with free isocyanate groups are preferred. The free isocyanate content of B measured according to DIN EN ISO 11 909, ranges usually from 5 to 20% by weight.

Preferably the free isocyanate content of B is between 8 and 20% by weight and more preferably between 10 and 18 % by weight.

The weight ratio of B /A is preferably in the range of 0,03/0,2. A weight ratio of B/A in the range of 0,05/0,1 is particularly preferred.

Besides the polymers A and B, the radiation-curable preparations may also contain a compound different from polymer A and polymer B and having a molecular weight of less than 800 g/mol and capable of polymerization by cationic or free-radical pathways. These compounds have generally at least one ethylenically unsaturated double bond and/or one epoxy group and a molecular weight being less than 800 g/mol. Such compounds generally serve to adjust to the desired working consistency of the radiation-curable preparations. This is particularly important if the preparation contains no other diluents, such as water and/or inert organic solvents, or contains these only to a subordinate extent. Such compounds are therefore also termed reactive diluents. The proportion of reactive diluents, based on the total amount of (A+B) and the reactive diluent in the radiation-curable preparation, is preferably in the range of 0 to 100% by weight, and most preferably in the range of from 5 to 50 % by weight.

Besides the radiation-curable polymer, the radiation-curable coating composition may also contain a different compound having a molecular weight of less than about 800 g/mol and capable of polymerization by cationic or free-radical pathways. These compounds have generally at least one ethylenically unsaturated double bond and/or one epoxy group and a molecular weight being less than about 800 g/mol. Such compounds generally serve to adjust to the desired working consistency of the radiation-curable preparations. This is particularly important if the preparation contains no other diluents, such as water and/or inert organic solvents, or contains these only to a subordinate extent. Such compounds are therefore also termed reactive diluents. The proportion of reactive diluents, based on the total amount of polymer and the reactive diluent in the radiation-curable preparation, is preferably in the range of about 0% to about 90% by weight, and most preferably in the range from about 5% to about 50% by weight. Preferred reactive diluents are the esterification products of di- or polyhydric alcohols with acrylic and/or methacrylic acid. Such compounds are generally termed polyacrylates or polyether acrylates. Hexanediol diacrylate, tripropylene glycol diacrylate and trimethylolpropane triacrylate are particularly preferred.

Radiation-curable coating compositions may also comprise polymers which have cationically polymerizable groups, in particular epoxy groups. These include copolymers of ethylenically unsaturated monomers, the copolymers containing, as comonomers, ethylenically unsaturated glycidyl ethers and/or glycidyl esters of ethylenically unsaturated carboxylic acids. They also include the glycidyl ethers of OH-group-containing polymers, such as OH-group-containing polyethers, polyesters, polyurethanes and novolacs. They include moreover the glycidyl esters of polymers containing carboxylic acid groups. If it is desired to have a cationically polymerizable component, the compositions may comprise, instead of or together with the cationically polymerizable polymers, a low-molecular-weight, cationically polymerizable compound, for example a di- or polyglycidyl ether of a low-molecular-weight di- or polyol or the di- or polyester of a low-molecular-weight di- or polycarboxylic acid.

The radiation-curable coating compositions comprise usual auxiliaries, such as thickeners, flow control agents, defoamers, UV stabilizers, emulsifiers, surface tension reducers and/or protective colloids. Suitable auxiliaries are well known to the person skilled in the coatings technology. Silicones, particularly polyether modified polydimethylsiloxane copolymers, may be used as surface additives to provide good substrate wetting and good anti-crater performance by reduction of surface tension of the coatings. Suitable stabilizers encompass typical UV absorbers, such as oxanilides, triazines, benzotriazoles (obtainable as Tinuvin™ grades from Ciba Geigy) and benzophenones. These may be used in combination with usual free-radical scavengers, for example sterically hindered amines, e.g. 2,2,6,6-tetramethylpiperidine and 2,6-di-tert-butylpiperidine (HALS compounds). Stabilizers are usually used in amounts of from about 0,1% to about 5,0% by weight and preferably from about 0,3% to about 2,5% by weight, based on the polymerizable components present in the preparation.

The second coating composition used in the processes of the invention further comprises one or more alkaline-instable pigments. In particular embodiments, the one or more pigments present in the second coating composition provide color, hiding, and/or are present as extenders. In particular embodiments, the one or more pigments included in the second coating composition can be inorganic or organic pigments. Such pigments include but are not limited to those in the form of titanium oxide, iron oxides, calcium carbonate, spinell pigments, titanates, clay, aluminum oxide, silicon dioxide, magnesium oxide, magnesium silicate, barium metaborate monohydrate, sodium oxide, potassium oxide, talc, barytes, zinc oxide, zinc sulfite and mixtures thereof, phtalocyanines and azo compounds. In particular embodiments, the second coating composition comprises one to five different pigments, such as one, two, three, four or five different pigments, which can each independently be organic or inorganic pigments.

In further particular embodiments, the one or more pigments included in the second coating composition are organic pigments, such as but not limited to azo-compounds or azo-pigments, quinazidones and/or phtalocyanines.

The second coating composition has a pigment volume concentration (PVC) (as defined herein) in the range of about 2% to about 10 %, such as between about 3% and about 9%, such as between about 4% and 8%, such as a PVC of about 5%, about 6% or about 7%.

According to the invention, , the first coating composition is pigment-free. As such, the first coating layer is a transparent (as defined herein) or semi-transparent coating layer. Semi-transparency can be obtained by adding one or more fillers or pigments to the first radiation curable composition. A transparent layer is also referred to in the art as a "clear coat(ing)".

The first and second coating compositions used for providing the first and second radiation-curable coating layers onto the surface of the fiber cement products of the invention may further comprise usual auxiliaries, e.g. fillers, surfactants, wetting agents, dispersants, defoamers, colorants, waxes, and other usual constituents. Examples of suitable fillers are aluminosilicates, silicates, alkaline-earth metal carbonates, preferably calcium carbonate in the form of calcite or lime, dolomite, and also aluminum silicates or magnesium silicates, e.g. talc.

In addition to the above, the coating composition used for providing the first and second radiation-curable coating layers on the surface of the fiber cement products of the invention further may comprise one or more additives included for properties, such as regulating flow and leveling, sheen, foaming, yellowing, resistance to stains, cleaner, burnish, block, mildew, dirt, or corrosion, and for retaining color and gloss.

Examples of suitable surface-active dispersing or wetting agents include those available under the trade designations, such as EFKA 4310, EFKA PX 4330, EFKA 7701 (BASF).

Examples of suitable defoamers include but are not limited to BYK 057, BYK 088, BYK 1790, BYK 1791, BYK 1794, BYK 1798 (BYK Cera), EFKA 2721 (BASF).

In addition, coating compositions used for providing the first and second radiation-curable coating layers on the surface of the fiber cement products of the invention may include one or more functional extenders to increase coverage, reduce cost, achieve durability, alter appearance, control rheology, and/or influence other desirable properties. Examples of functional extenders include, for example, barium sulphate, aluminum silicate, magnesium silicate, barium sulphate, calcium carbonate, clay, gypsum, silica, and talc.

In further particular embodiments of the processes according to the invention, the second coating has a hiding power (as defined herein) of about 90% to about 100%.

In particular embodiments, the first coating composition is applied as a wet coating weight in the range from about 10 to about 100 g/m$^2$, in particular from about 20 to about 90 g/m$^2$, more in particular from about 40 to about 80 g/m$^2$. In further particular embodiments, the first coating composition is applied as a wet coating weight in about 70 g/m$^2$ on the surface of the fiber cement product. In further particular embodiments, the thickness of the first radiation curable composition layer ranges from about 5$\mu$m to about 100$\mu$m.

In particular embodiments, the second coating composition is applied as a wet coating weight in the range from about 10 to about 200 g/m$^2$, in particular from about 50 to about 190 g/m$^2$, more in particular from about 100 to about 180 g/m$^2$. In further particular embodiments, the first coating composition is applied as a wet coating weight in about 160 g/m$^2$ on the surface of the fiber cement product. In further particular embodiments, the thickness of the second radiation curable composition layer ranges from about 10$\mu$m to about 120$\mu$m.

The combination of the above-described criteria of thicknesses and/or pigment volume concentrations and/or hiding powers for both the first and the second coating compositions causes that the first coating layer is substantially made invisible through the second layer.

The first and second coating compositions are applied in any known manner, for example by spraying, trowelling, knife application, brushing, rolling, curtain coating or pouring onto the cement bonded board, or by a combination of one or more applications. In particular embodiments, the coating composition is preferably applied by roller coating. It is also conceivable that the preparation may be applied to the cement board by hot-melt processes or by powder-coating processes. The radiation-curable composition is preferably applied by roller-coating. The application may take place either at room temperature or at elevated temperature, but preferably not above 100 °C.

Thus, the coating compositions described herein can be applied to a surface of a fiber cement product using a brush, blade, roller, sprayer (e.g., air-assisted or airless, electrostatic), vacuum coater, curtain coater, flood coater or any suitable device that promotes an even distribution of the coating composition over the surface, even if the surface is damaged, worn, or cracked. The coating compositions may be applied to provide a smooth surface, colored surface or textured surface. A portion or an entire surface of the fiber cement product may be coated at one time. In addition or as an alternative, all or a portion of the surface may be coated more than one time to achieve the desired thickness, gloss, and/or surface effect. The amount of coverage obtained by a quantity of the composition will vary depending on the desire and/or condition of the surface to be covered and the thickness of the coating applied.

In the processes of the invention, the step (iv) of partially curing the first coating layer of the first radiation-curable coating composition and the step (vi) of curing the first and second layers of the first and second radiation-curable coating compositions, respectively, so as to obtain a fiber cement product of the invention can be performed using any suitable radiation curing method known in the art.

For example, radiation curing of the coating compositions may include curing by heat curing, dual-curing, UV radiation curing, electron beam (EB) curing, LED curing and other curing technologies within a thermoplastic or thermosetting system.

Also, the step (iv) of partially curing the first coating layer and step (vi) of curing the second coating layer of radiation curable composition by radiation may include curing by heat curing, dual-curing, UV radiation curing, electron beam (EB) curing, LED curing in combination with Excimer technology.

If curing is performed by UV radiation, the preparations to be used comprise at least one photoinitiator. A distinction is to be made here between photoinitiators for free-radical curing mechanisms (polymerization of ethylenically unsaturated double bonds) and photoinitiators for cationic curing mechanisms (cationic polymerization of ethylenically unsaturated double bonds or polymerization of compounds containing epoxy groups). Photoinitiators are not needed for electron beam curable compositions.

Suitable photoinitiators for free-radical photopolymerization, i.e. polymerization of ethylenically unsaturated double bonds, are benzophenone and benzophenone derivatives, such as 4-phenylbenzophenone and 4-chlorobenzophenone, Michler's ketone, anthrone, acetophenone derivatives, such as 1-benzoylcyclohexan-1-ol, 2-hydroxy-2,2-dimethylacetophenone and 2,2-dimethoxy-2-phenylacetophenone, benzoin and benzoin ethers, such as methyl benzoin ether, ethyl benzoin ether and butyl benzoin ether, benzil ketals, such as benzil dimethyl ketal, 2-methyl-1-[4-(methylthio)phenyl]-2-morpholinopropan-1-one, anthraquinone and its derivatives, such as .beta.-methylanthraquinone and tertbutylanthraquinone, acylphosphine oxides, such as 2,4,6-trimethylbenzoyldiphenylphosphine oxide, ethyl-2,4,6-trimethylbenzoylphenylphosphinate and bisacylphosphine oxides.

Suitable photoinitiators for cationic photopolymerization, i.e. the polymerization of vinyl compounds or compounds containing epoxy groups, are aryl diazonium salts, such as 4-methoxybenzenediazonium hexafluorophosphate, benzenediazonium tetrafluoroborate and toluenediazonium tetrafluoroarsenate, aryliodonium salts, such as diphenyliodonium hexafluoroarsenate, arylsulfonium salts, such as triphenylsulfonium hexafluorophosphate, benzene- and toluenesulfonium hexafluorophosphate and bis [4-diphenylsulfoniophenyl] sulfide bishexafluorophosphate, disulfones, such as diphenyl disulfone and phenyl-4-tolyl disulfone, diazodisulfones, imidotriflates, benzoin tosylates, isoquinolinium salts, such as N-ethoxyisoquinolinium hexafluorophosphate, phenylpyridinium salts, such as N-ethoxy-4-phenylpyridinium hexafluorophosphate, picolinium salts, such as N-ethoxy-2-picolinium hexafluorophosphate, ferrocenium salts, titanocenes and titanocenium salts.

The above-mentioned photoinitiators are used, in amounts from about 0,05% to about 20% by weight, preferably from about 0,1% to about 10% by weight and in particular from about 0,1% to about 5% by weight, based on the polymerizable components of the radiation-curable composition.

In particular embodiments, the photo-initiator used for UV-curing in the processes of the present invention is Irgacure® 184. Irgacure® 184 is a highly efficient non-yellowing photoinitiator used to initiate the photo polymerization of chemically unsaturated prepolymers e.g., acrylates - in combination with mono- or multifunctional vinyl monomers.

In particular embodiments, the photo-initiator used for UV-curing in the processes of the present invention is Irgacure® 819. Irgacure® 819 is a versatile photoinitiator for radical polymerization of unsaturated resins upon UV light exposure. It is especially suitable for white pigmented formulations, the curing of glass-fiber-reinforced polyester/styrene systems and for clear coats for outdoor use in combinations with light stabilizers. Thick-section curing is also possible with this photoinitiator.

The radiation-curable coating composition may be cured by exposure to a UV radiation of wavelength generally from about 200 nm to about 600 nm. Suitable examples of UV sources are high and medium pressure mercury, iron, gallium or lead vapor lamps as well as LED arrays. Medium pressure mercury vapor lamps and LED arrays are particularly preferred, e.g. the CK or CK1 sources from the company IST (Institut für Strahlungstechnologie). The radiation dose usually sufficient for obtaining some degree of crosslinking is in the range from about 80 to about 3000 mJ/cm$^2$.

In particular embodiments of the invention, in order to fully cure a radiation curable composition applied as a surface coating, more than 1000 mJ/cm$^2$ of radiation is necessary.

In particular embodiments of the invention, the step of partially curing the first coating layer of radiation curable composition is done by irradiation using about 100 to about 800 mJ/cm$^2$.

Any solvent present, in particular water, is dried out before the curing in a separate drying step preceding curing, for example by heating to temperatures in the range from about 40°C to about 80°C, or by exposure to IR radiation.

In case of electron beam curing, irradiation is performed with high-energy electrons (usually from 100 to 350 keV), by applying a high voltage to tungsten filaments inside a vacuum chamber), and the actual curing step takes place in an inert, oxygen-free atmosphere.

In further particular embodiments of these processes, the second coating layer is covered with a radiation permeable film prior to the curing step. In particular, according to some embodiments, the second coating layer may be roll-covered with a radiation permeable film before applying radiation. Care is taken to have an intimate sealing contact between the liquid coated panels and the controlled surface layer of the film, in order to remove entrapped bubbles and air pockets between the overlying film and the panel by the roller. This film provides protection against the radical chain-breaking reaction of oxygen, and avoids the use of inert gas atmosphere in the case of electron beam curing. Moreover, this covering film may have a controlled gloss surface with a predetermined surface finish on the side in contact with the liquid coated panel surface. Suitable radiation permeable films are thin plastic films of polyester or polyolefins. The controlled surface gloss on the radiation permeable film can be obtained in various ways, such as embossing, printing, coating, etching or by the use of matting additives. Moreover, the radiation permeable film with its regularly distributed surface micro-roughness can possibly be texturized, e.g. allowing labelling.

In further particular embodiments of these processes, the curing step is preceded by a treatment of the second coating layer by means of an excimer laser.

The irradiation with an excimer laser influences, i.e. reduces, the gloss of the second layer at its surface, which is typically the outer surface of the fiber cement product. Thus, optionally, after having provided the second coating layer, and prior to the curing of the second coating layer, the irradiation with an excimer laser may be applied. This results in a low-gloss effect of the uncured second coating layer, which is subsequently fully cured with irradiation, e.g. UV irradiation.

Further finishing techniques may also be applied, including but not limited to PVC flowing or wood flowing.

In a second aspect, the present invention provides fiber cement products obtainable by the processes of the present invention.

In the context of the present invention, fiber cement products are to be understood as cementitious products comprising cement and synthetic (and optionally natural) fibers. The fiber cement products are made out of fiber cement slurry, which is formed in a so-called "green" fiber cement product, and then cured.

Dependent to some extent on the curing process used, the fiber cement slurry typically comprises water, process or reinforcing fibers which are synthetic organic fibers (and optionally also natural organic fibers, such as cellulose), cement (e.g. Portland cement), limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other additives.

The fiber cement products of the invention have a thickness of between about 4 mm and about 200 mm, in particular between about 6 mm and about 200 mm, more in particular between about 8 mm and about 200 mm, most in particular between about 10 mm and about 200 mm.

The fiber cement products as referred to herein include roof or wall covering products made out of fiber cement, such as fiber cement sidings, fiber cement boards, flat fiber cement sheets, corrugated fiber cement sheets and the like. According to particular embodiments, the fiber cement products according to the invention can be roofing or façade elements, flat sheets or corrugated sheets. According to further particular embodiments, the fiber cement products of the present invention are fiber cement sheets.

The fiber cement products of the present invention comprise from about 0.1 to about 5 weight%, such as particularly from about 0.5 to about 4 weight% of fibers, such as more particularly between about 1 to 3 weight% of fibers with respect to the total weight of the fiber cement product.

According to particular embodiments, the fiber cement products according to the invention are characterized in that they comprise fibers chosen from the group consisting of cellulose fibers or other inorganic or organic reinforcing fibers in a weight % of about 0.1 to about 5. In particular embodiments, organic fibers are selected from the group consisting of polypropylene, polyvinylalcohol polyacrylonitrile fibers, polyethyelene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like. In further particular embodiments, the fiber cement products of the present invention may comprise fibrils fibrids, such as for example but not limited to, polyolefinic fibrils fibrids % in a weight % of about 0.1 to 3, such as "synthetic wood pulp".

According to certain particular embodiments, the fiber cement products of the present invention comprise 20 to 95 weight % cement as hydraulic binder. Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of water, sand, silica sand flour, condensed silica fume, microsilica, fly-ashes, amorphous silica, ground quartz, the ground rock, clays, pigments, kaolin, metakaolin, blast furnace slag, carbonates, puzzolanas, aluminium hydroxide, wollastonite, mica, perlite, calcium carbonate, and other additives (e.g. colouring additives) etc. It will be understood that each of these components is present in suitable amounts, which depend on the type of the specific fiber cement product and can be determined by the person skilled in the art. In particular embodiments, the total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 and about 1 weight % compared to the total initial dry weight of the composition.

The process for the manufacture of the fiber cement products most widely used is the Hatschek process, which is a modified sieve cylinder paper making machine. Other manufacturing processes are the Magnani process, injection, extrusion, flow-on and others. The Fiber-reinforced cement products are preferably manufactured by the Hatschek process. The green or uncured sheet is optionally post-compressed usually at pressures in the range from 22 to 30 MPa to obtain the desired density and subsequently air-cured for about 5 hours in an oven at a temperature not higher than 80°C.

The sheets are possibly but not necessarily autoclaved, generally within 1 week after production of the uncured sheet, and cured at temperatures in the range of from 160°C to 190°C while subjected to pressures ranging generally from about 0,7 MPa to 1,3 MPa during preferably about 6 to 24 hours.

The fiber cement building materials may be porous materials comprising one or more different materials such as a gypsum composite, cement composite, geopolymer composite or other composites having an inorganic binder. The surface of the material may be sanded, machined, extruded, molded or otherwise formed into any desired shape by various processes known in the art. The fiber cement building materials may be fully cured, partially cured or in the uncured "green" state. Fiber cement building materials may further include gypsum board, fiber cement board, fiber cement board reinforced by a mesh or continuous fibers, gypsum board reinforced by short fibers, a mesh or continuous fibers, inorganic bonded wood and fiber composite materials, geopolymer bonded wood and fiber boards, concrete roofing tile material, and fiber-plastic composite material.

In particular embodiments, the fiber cement products of the invention are fiber cement sheets produced by the processes of the present invention and can be used to provide an outer surface to walls, both internal as well as external a building or construction, e.g. as façade plate, siding, etc.

## EXAMPLES

It will be appreciated that the following examples, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention that is defined in the following claims.

Further, it is recognized that many embodiments may be conceived that do not achieve all of the advantages of some embodiments, yet the absence of a particular advantage shall not be construed to necessarily mean that such an embodiment is outside the scope of the present invention.

**Example 1: Production of fiber cement sheets provided with double coating system according to the processes of the invention**

The invention will now be illustrated by means of one particular non-limiting embodiment of the processes of the invention.

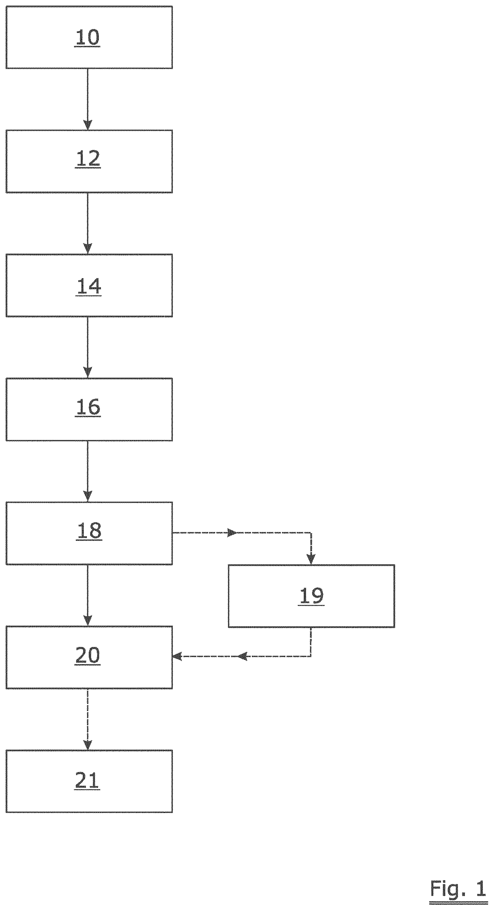

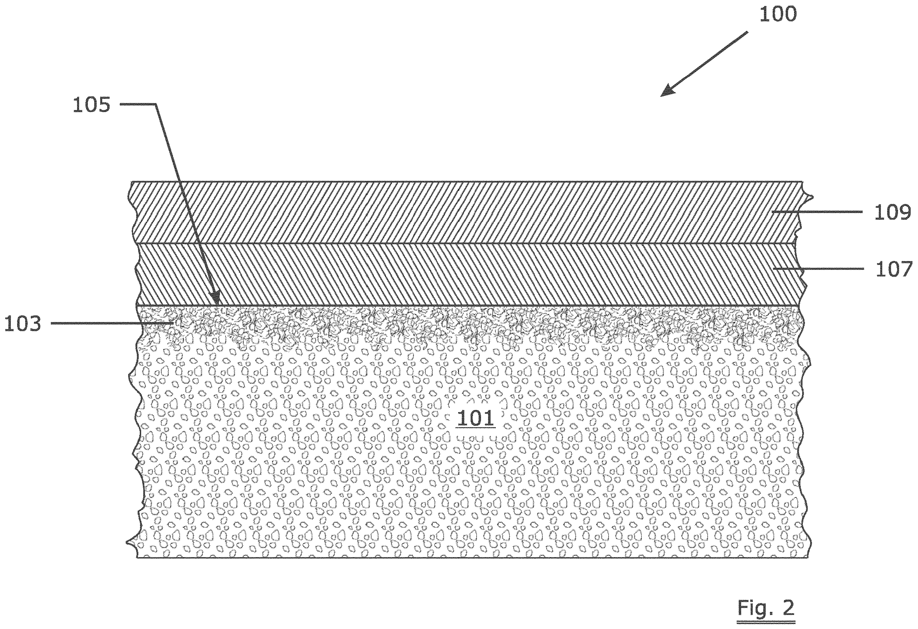

Figure 1 shows a schematically view of the process steps of a process according to the invention. Figure 2 shows a schematically view of a cross section of a fiber cement product 100, being a fiber cement boards, according to the second aspect of the invention made using the process of figure 1.

In a first step 10, a cured fiber cement board 101 is provided. In this embodiment, an air cured fiber cement board "Eterplan" is provided. This board 101 was manufactured starting from an aqueous hydraulic-setting suspension comprising one or more cementitious binders, processing fibers, and optionally reinforcing fibers, processing aids, additives and/or fillers. This aqueous suspension with a solid content generally ranging from 2 to 10% was mixed so as to obtain a substantially uniform distribution of the components. The suspension was then dewatered, and the fresh product (green product) was shaped in the form of a plane sheet, which is optionally post-compressed to densify and subsequently left to harden under atmospheric conditions (air-curing) or under specific pressure, temperature and humidity conditions (autoclaving).

In a next step 12, the board 101 was provided at one of its surfaces 105 with an adhesion primer 103 to promote the adhesion of the next composition coating layers. The adhesion primer used was "Natura Walzgrundierung".

In a consecutive step 14, a first layer 107 of a first UV-radiation curable composition was provided to the surface 105. This was done by roller coating.

The first radiation curable composition is a transparent composition, to provide a transparent coating layer, being 2K- UV- 4500, 2K- UV- DP- 2010.

The wet amount of composition applied was about 70g/m$^2$ to provide a first coating layer.

In step 16, this first layer of radiation curable composition was partially cured or gelled by UV-radiation. A UV lamp was used for this partially curing.

The UV-radiation was applied with an irradiation of between about 100 and about 800mJ/cm$^2$ of fiber cement product surface. As such, this first layer was only partially cured. Partial curing can be tested using the standard ISO 2409, in which the amount of double bounds that are unreacted is determined. It was determined that when the amount of remaining unreacted double bounds was between about 20% and 50%, the first coating was appropriately partially cured.

In a consecutive step 18, a second layer 109 of a UV-radiation curable composition was provided on top of the first, partially cured, layer 107. This was done by roller coating.

The second radiation curable composition was substantially the same radiation curable composition as used for the first layer, but being provided with pigment.

In a first embodiment, the pigment added was "Novoprem BLS02", available from Clariant, of which an amount of about 5wt% was added to the composition. The layer was applied in a wet amount of about 160g/m$^2$ to provide a cured coating layer with thickness of about 120$\mu$m.

In a second embodiment, the pigment added was "Hostaprem Red E5B02" of which an amount of about 5wt% was added to the composition. The layer was applied in a wet amount of 160g/m$^2$ to provide a cured coating layer with thickness of about 120$\mu$m.

In step 20, this first and second layer of radiation curable composition were cured by UV-radiation. A UV-lamp was used for this curing. The UV-radiation was applied with an irradiation energy of about 2000 mJ/cm$^2$ of fiber cement product surface. As such, the first and second layers were fully cured.

Both embodiments were subjected to an outdoor exposure of 2.5 years. None of both showed any traces of brownish sports.

As a reference, the same substrate as substrate 101 was coated with the adhesion primer with 1.6% "Novoprem BLS02".

This reference sample was subjected to the same outdoor exposure and did show after 2.5 years, brownish spots.

The same two embodiments and the reference were subjected to a standard Xenon test (DIN 53387). The fiber cement products were irradiated with a Xenon lamp at wavelengths between about 300 and about 400 nm at a temperature of about 38°C and a relative humidity of about 70%

A raining system was applied in accordance with method A of the DIN standard 53387. In this method, spraying was done with de-ionized water for a period of 18 minutes. The products were dried for about 102 minutes.

After Xenon test of 170h, for the reference sample, clearly brownish sport were present, whereas even after 1000h of Xenon test, the two embodiments according to the invention remained free of brown spots.

In alternative embodiments, the process steps 19 and 21 were applied, where before the UV-curing step 20, a UV-radiation permeable foil with an imprinted pattern was roll-coated on the second, uncured composition layer 109. After curing step 20, the foil was again removed from the cured composition surface. As the pattern was oriented towards the composition layer 109, the cured composition coating layer 109 showed the mirror image of the pattern, thereby e.g. reducing the gloss of the fiber cement coated product.

In yet alternative embodiments, the process steps 19 and 21 were applied, where before the UV-curing step 20, the second radiation curable composition layer was treated with an excimer laser.

The irradiation with an excimer laser influenced, i.e. reduced, the gloss of the second layer at its surface, which became visible at the outer surface of the fiber cement product. This resulted in a low-gloss effect of the uncured second coating layer, which was subsequently fully cured with irradiation, e.g. UV irradiation. Eventually, the finished fiber cement product also showed a reduced gloss.

**Claims**

1. A process for manufacturing coated fiber cement products, wherein said process comprises the steps of:

   (i) providing a cured fiber cement product having at least one surface;
   (ii) applying a primer to the at least one surface of the cured fiber cement product;

(iii) providing a first coating layer of a first radiation curable coating composition to the at least one surface;

(iv) partially curing the first coating layer of radiation curable coating composition by radiation;

(v) providing a second coating layer of a second radiation curable coating composition to the partially cured first coating layer, the second radiation curable coating composition comprising pigments,; and

(vi) curing the first and the second coating layer of radiation curable coating composition by radiation,

wherein the first and the second radiation curable coating composition are the same with the proviso that the first radiation curable coating composition is pigment-free and the second radiation curable coating composition comprises one or more alkaline instable pigments and has a pigment volume concentration (PVC) in the range of between 2% and 10%, wherein PVC (expressed in %) of said composition is calculated as the ratio of the volume of pigment versus the total volume of solids, multiplied by 100.

2. The process according to claim 1, wherein said second radiation curable coating composition comprises organic pigments.

3. The process according to any one of the preceding claims, wherein said second radiation curable coating composition comprises between one and five different pigments.

4. The process according to any one of the preceding claims, wherein said second radiation curable coating composition has a hiding power of between 90% and 100%, wherein said hiding power is measured by a standard test chosen from the group consisting of BS 3900-D4 (i.e. also referred to as ISO 2814), BS 3900-D7 (i.e. also referred to as ISO 6504/1) and BS 3900-D11 (also referred to as ISO 6504/3).

5. The process according to any one of the preceding claims wherein the thickness of said second coating layer ranges between $10\mu$m and $120\mu$m.

6. The process according to any one of the preceding claims, wherein the primer comprises a binder and a pigment.

7. The process according to any one of the preceding claims, wherein the thickness of said first coating layer ranges between $10\mu$m and $100\mu$m.

8. The process according to any one of the preceding claims, wherein said step of partially curing said first coating layer of said first radiation curable coating composition is done by irradiation using 100 to 800 mJ/cm$^2$ of irradiation energy.

9. The process according to any one of claims 1 to 8, wherein said first and said second radiation curable coating composition are UV-curable compositions.

10. The process according to any one of claims 1 to 8, wherein said first and said second radiation curable coating composition are electron beam curable compositions.

11. The process according to any one of the preceding claims, wherein said first radiation curable coating composition and said second radiation curable coating composition are isocyanate-bearing polyurethanes having ethylenically unsaturated double bonds.

12. The process according to any one of the preceding claims, wherein said second coating layer is covered with a radiation permeable film prior to said curing step.

13. The process according to any one of the preceding claims, wherein said curing step is preceded by a treatment of said second coating layer by means of an excimer laser.

14. A fiber cement product obtainable by the process according to any one of the preceding claims having a thickness of between 4 mm and 200 mm.

**Patentansprüche**

1. Verfahren zur Herstellung von beschichteten Faserzementprodukten, wobei das Verfahren die folgenden Schritte umfasst:

(i) Bereitstellen eines gehärteten Faserzementprodukts mit mindestens einer Oberfläche;
(ii) Aufbringen einer Grundierung auf die mindestens eine Oberfläche des gehärteten Faserzementprodukts;
(iii) Aufbringen einer ersten Beschichtung aus einer ersten strahlungshärtbaren Beschichtungszusammensetzung auf die mindestens eine Oberfläche;
(iv) teilweises Aushärten der ersten Beschichtung aus einer strahlungshärtbaren Beschichtungszusammensetzung mit Strahlung;
(v) Aufbringen einer zweiten Beschichtung aus einer zweiten strahlungshärtbaren Beschichtungszusammensetzung auf die teilweise gehärtete, erste Beschichtung, wobei die zweite strahlungshärtbare Beschichtungszusammensetzung Pigmente umfasst, und
(vi) Aushärten der ersten und der zweiten Beschichtung, die jede aus einer strahlungshärtbaren Beschichtungszusammensetzung bestehen, durch Strahlung,

wobei die erste und die zweite strahlungshärtbare Beschichtungszusammensetzung die gleiche sind, mit der Ausnahme, dass die erste strahlungshärtbare Beschichtungszusammensetzung pigmentfrei ist und die zweite strahlungshärtbare Beschichtungszusammensetzung ein oder mehrere alkalisch instabile Pigmente umfasst und eine Pigmentvolumenkonzentration (PVK) im Bereich zwischen 2 % und 10 % aufweist, wobei die PVK (ausgedrückt in %) der Zusammensetzung als das Verhältnis des Pigmentvolumens zum Gesamtvolumen der Feststoffe, multipliziert mit 100, berechnet wird.

2. Verfahren nach Anspruch 1, wobei die zweite strahlungshärtbare Beschichtungszusammensetzung organische Pigmente umfasst.

3. Verfahren nach einem der vorhergehenden Ansprüche, wobei die zweite strahlungshärtbare Beschichtungszusammensetzung zwischen ein und fünf unterschiedlichen Pigmenten umfasst.

4. Verfahren nach einem der vorhergehenden Ansprüche, wobei die zweite strahlungshärtbare Beschichtungszusammensetzung ein Deckvermögen zwischen 90 % und 100 % aufweist, wobei das Deckvermögen durch einen Standardtest gemessen wird, der aus der Gruppe ausgewählt wird, die aus BS 3900-D4 (d. h. auch als ISO 2814 bezeichnet), BS 3900-D7 (d. h. auch als ISO 6504/1 bezeichnet) und BS 3900-D11 (auch als ISO 6504/3 bezeichnet) besteht.

5. Verfahren nach einem der vorhergehenden Ansprüche, wobei die Dicke der zweiten Beschichtung zwischen 10 $\mu$m und 120 $\mu$m liegt.

6. Verfahren nach einem der vorangehenden Ansprüche, wobei die Grundierung ein Bindemittel und ein Pigment umfasst.

7. Verfahren nach einem der vorangehenden Ansprüche, wobei die Dicke der ersten Beschichtung zwischen 10 $\mu$m und 100 $\mu$m liegt.

8. Verfahren nach einem der vorhergehenden Ansprüche, wobei der Schritt des teilweisen Aushärtens der ersten Beschichtung der ersten strahlungshärtbaren Beschichtungszusammensetzung durch Bestrahlung unter Verwendung von 100 bis 800 mJ/cm$^2$ Strahlungsenergie erfolgt.

9. Verfahren nach einem der Ansprüche 1 bis 8, wobei die erste und die zweite strahlungshärtbare Beschichtungszusammensetzung UV-härtbare Zusammensetzungen sind.

10. Verfahren nach einem der Ansprüche 1 bis 8, wobei es sich bei der ersten und der zweiten strahlungshärtbaren Beschichtungszusammensetzung um Zusammensetzungen handelt, die mit Elektronenstrahlen aushärtbar sind.

11. Verfahren nach einem der vorhergehenden Ansprüche, wobei die erste strahlungshärtbare Beschichtungszusammensetzung und die zweite strahlungshärtbare Beschichtungszusammensetzung isocyanathaltige Polyurethane mit ethylenisch ungesättigten Doppelbindungen sind.

12. Verfahren nach einem der vorhergehenden Ansprüche, wobei die zweite Beschichtung vor dem Härtungsschritt mit einem strahlungsdurchlässigen Film bedeckt wird.

**13.** Verfahren nach einem der vorhergehenden Ansprüche, wobei dem Härtungsschritt eine Behandlung der zweiten Beschichtung mit einem Excimer-Laser vorausgeht.

**14.** Faserzementprodukt, erhältlich durch das Verfahren nach einem der vorangehenden Ansprüche, mit einer Dicke zwischen 4 mm und 200 mm.

## Revendications

**1.** Procédé de fabrication de produits en fibrociment revêtus, dans lequel ledit procédé comprend les étapes suivantes:

(i) fournir un produit en fibrociment durci ayant au moins une surface;
(ii) appliquer un apprêt sur au moins une surface du produit en fibrociment durci;
(iii) appliquer une première couche d'une première composition de revêtement durcissable par rayonnement sur l'au moins une surface;
(iv) durcir partiellement la première couche de revêtement de composition de revêtement durcissable par rayonnement;
(v) appliquer une deuxième couche d'une deuxième composition de revêtement durcissable par rayonnement sur la première couche de revêtement partiellement durcie, la deuxième composition de revêtement durcissable par rayonnement comprenant des pigments, et
(vi) durcir par rayonnement la première et la deuxième couche de revêtement de composition de revêtement durcissable par le rayonnement,

dans laquelle la première et la seconde composition de revêtement durcissable par rayonnement sont identiques, à condition que la première composition de revêtement durcissable par rayonnement soit exempte de pigments et que la seconde composition de revêtement durcissable par rayonnement comprenne un ou plusieurs pigments alcalins instables et ait une concentration volumique de pigments (PVC) comprise entre 2 % et 10 %, dans lequel le PVC (exprimée en %) de ladite composition étant calculée comme le rapport entre le volume de pigments et le volume total de solides, multiplié par 100.

**2.** Procédé selon la revendication 1, dans lequel ladite seconde composition de revêtement durcissable par rayonnement comprend des pigments organiques.

**3.** Procédé selon l'une quelconque des revendications précédentes, dans lequel ladite deuxième composition de revêtement durcissable par rayonnement comprend entre un et cinq pigments différents.

**4.** Procédé selon l'une quelconque des revendications précédentes, dans lequel ladite deuxième composition de revêtement durcissable par rayonnement a un pouvoir masquant compris entre 90 % et 100 %, dans ledit pouvoir masquant étant mesuré par un test standard choisi dans le groupe constitué de BS 3900-D4 (également dénommé ISO 2814), BS 3900-D7 (également dénommé ISO 6504/1) et BS 3900-D11 (également dénommé ISO 6504/3).

**5.** Le procédé selon l'une des revendications précédentes, dans lequel l'épaisseur de la seconde couche de revêtement est comprise entre 10$\mu$m et 120$\mu$m.

**6.** Procédé selon l'une quelconque des revendications précédentes, dans lequel l'apprêt comprend un liant et un pigment.

**7.** Procédé selon l'une quelconque des revendications précédentes, dans lequel l'épaisseur de la première couche de revêtement est comprise entre 10$\mu$m et 100$\mu$m.

**8.** Le procédé selon l'une quelconque des revendications précédentes, dans lequel ladite étape de durcissement partiel de ladite première couche de revêtement de ladite première composition de revêtement durcissable par rayonnement est effectuée par irradiation à l'aide d'une énergie d'irradiation comprise entre 100 et 800 mJ/cm$^2$.

**9.** Procédé selon l'une des revendications 1 à 8, dans lequel la première et la seconde composition de revêtement durcissable par rayonnement sont des compositions durcissables aux UV.

**10.** Procédé selon l'une des revendications 1 à 8, dans lequel ladite première et ladite seconde composition de revêtement durcissable par rayonnement sont des compositions durcissables par faisceau d'électrons.

11. Procédé selon l'une quelconque des revendications précédentes, dans lequel ladite première composition de revêtement durcissable par rayonnement et ladite seconde composition de revêtement durcissable par rayonnement sont des polyuréthanes contenant de l'isocyanate ayant des doubles liaisons éthyléniquement insaturées.

12. Procédé selon l'une quelconque des revendications précédentes, dans lequel ladite seconde couche de revêtement est recouverte d'un film perméable aux rayonnements avant ladite étape de durcissement.

13. Procédé selon l'une quelconque des revendications précédentes, dans lequel ladite étape de durcissement est précédée d'un traitement de ladite seconde couche de revêtement au moyen d'un laser excimer.

14. Produit en fibrociment obtenu par le procédé selon l'une quelconque des revendications précédentes, ayant une épaisseur comprise entre 4 mm et 200 mm.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1914215 B1
- WO 2011020755 A1

- US 5871824 A